# EUROPEAN PATENT APPLICATION

(11) **EP 1 491 946 A1**
(43) Date of publication of application: **29.12.2004**
(21) Application number: 03708511.5
(22) Date of filing: 07.03.2003
(51) Int. Cl.: G03B 21/60

(54) **SCREEN**

(30) Priority: 08.03.2002 JP 2002063271; 06.06.2002 JP 2002165623
(71) Applicant: Yupo Corporation, Tokyo 101-0062 (JP)
(72) Inventor: Takahashi, Tomotsugu, Chiyoda-ku, Tokyo 101-0062 (JP); Ueda, Takahiko, c/o Yupo Corp. Kashima Factory, Kashima-gun, Ibaraki 314-0102 (JP)
(74) Representative: Zimmermann, Gerd Heinrich
(86) International application number: PCT/JP2003/002705
(87) International publication number: WO 2003/077026

(57) **Abstract**

Disclosed is a screen having a film layer (A) that comprises a thermoplastic resin and has a whole light transmittance of from 30 to 80% and a whole light reflectance of from 20 to 70%. The screen exhibits its image visibility for both reflected light and transmitted light.

## Description

### TECHNICAL FIELD

The present invention relates to a screen. Precisely, the invention relates to a screen capable of exhibiting the function of image visualization for both reflected light and transmitted light.

### BACKGROUND ART

As one general method of presentation or advertisement, images are projected on screens through projectors such as slide projector, overhead projector, liquid-crystal projector, etc. On the screen, the images are generally visualized as the reflected light from the face of the screen onto which they are projected, and the face of the screen on which the images can be seen is limited to one.

On the other hand, a hologram display device that utilizes transmitted light has been proposed, for example, as in JP-A-2000-155374. However, the hologram display device has some problems in that the projection angle must be controlled to fall within a specific range and the angle of visibility is limited. Another problemwith it is that the device is expensive.

An object of the present invention is to provide a semitransparent screen capable of exhibiting the function of image visualization for both reflected light and transmitted light. The screen enables visualization of clear images not only on the image-projected side thereof but also on the back side of the screen in image projection thereon through projectors such as slide projector, overhead projector, liquid-crystal projector, etc.

### SUMMARY OF THE INVENTION

We, the present inventors have found out, as a screen capable of exhibiting the function of image visualization for both reflected light and transmitted light, a processed film having specific optical properties and structure.

Specifically, the invention provides a screen having a film layer (A) that comprises a thermoplastic resin and has a whole light transmittance of from 30 to 80% and a whole light reflectance of from 20 to 70%.

Preferably, the opacity of the film layer (A) is from 10 to 75%; and also preferably, the glossiness thereof is at most 60%. Preferably, the thickness of the film layer (A) is from 20 to 500 µm; and also preferably, the porosity thereof is from 0.1 to 25%. Preferably, the film layer (A) has a multi-layer structure; and more preferably, it has a multi-layer structure that contains a layer stretched at least one direction. Also preferably, a coating layer is provided on one face of the film layer (A).

Preferably, the film layer (A) has through-holes having a hole diameter of from 0.1 to 8 mm and running in the direction of the thickness of the film layer, in which the through-holes are continuously distributed in the plane direction of the film layer at a pitch of from 0.1 to 5 mm in terms of the shortest distance between the neighboring through-holes. Also preferably, a film layer (B) comprising a thermoplastic resin and having a whole light transmittance of at least 88% is provided on one face of the film layer (A); and also preferably, the thickness of the film layer (B) is from 10 to 1000 µm.

Preferably, an adhesive layer or a re-peelable layer that may be repeatedly stuck and peeled is provided on at least one face of the film layer (A) or on the film layer (B). Also preferably, the re-peelable layer is a suction layer, a weakly-adhesive layer or an electrostatic suction layer; and also preferably, a peelable substance is laminated on the surface of the adhesive layer or the re-peelable layer.

Preferably, the curl value of the film layer (A) is at most 250 nm; and also preferably, the film layer (A) and/or the film layer (B) and/or the coating layer are printed. Preferably, the thermoplastic resin used in the invention includes a polyolefin-based resin or a polyester-based resin; and also preferably, the essential thermoplastic resin of the film layer (A) is a polyolefin-based resin, especially preferably a polypropylene-based resin.

### DETAILED DESCRIPTION OF THE INVENTION

The screen of the invention is described in detail hereinunder. In this description, the numerical range expressed by the wording "a number to another number" means the range that falls between the former number indicating the lowermost limit of the range and the latter number indicating the uppermost limit thereof.

The screen of the invention may have any desired form, depending on the site where it is set, the object of the screen and the method of how to set it. In this description, tapestry screens (these have a drop curtain-like form, and are used for image projection thereon while they are hung in an open space orbeforeawall face) , show window screens (these have an adhesive layer or a re-peelable layer on at least one face thereof, and are directly stuck onto the face of glass for image projection thereon) , and roll screens (these are used for image projection thereon while hung like tapestry screens, but are so worked that they can be rolled up for storage; and while they are not used, they can be kept rolled up around the take-up tube fitted at their top) are taken into consideration for convenience' sake, but these forms may be changed and modified in any desired manner not overstepping the scope and the gist of the invention.

The film layer (A) to constitute the screen of the invention has a whole light transmittance of from 30 to 80%, preferably from 35 to 80%, more preferably from 40 to 80%, and has a whole light reflectance of from 20 to 70%, preferably from 20 to 65%, more preferably from 20 to 60%.

If the whole light transmittance is smaller than 30% or if the whole light reflectance is higher than 70%, then the mages on the back side of the screen will be dark and will be difficult to see through the screen. If the whole light transmittance is higher than 80% or the whole light reflectance is lower than 20%, then the images on the projector side of the screen will be dark and will be difficult to see through the screen.

The whole light transmittance and the whole light reflectance as referred to herein are the mean value of the transmittance and the reflectance, respectively, measured at different wavelengths of from 400 to 700 nm according to the method of JIS-Z8722.

Preferably, the opacity of the film layer (A) to constitute the screen of the invention is from 10 to 75%, more preferably from 20 to 70%, even more preferably from 30 to 70%. If the opacity is lower than 10%, then the images on the projector side of the screen will be difficult to see; but if higher than 75%, then the images on the back side of the screen will be difficult to see through the screen. The opacity as referred to herein is measured according to the method of JIS-P8138. Briefly, the value of the sample measured with a black board applied to the back of the sample is divided by the value thereof measured with a white board applied to the back thereof, and this indicates the opacity in terms of percentage.

Preferably, the glossiness of the film layer (A) is at most 60%, more preferably at most 50%. If the glossiness is higher than 60%, then the screen surface will undergo halation and the images will be difficult to see through the screen. The glossiness as referred to herein is measured according to the method of JIS-P8142.

Preferably, the thickness of the film layer (A) is from 20 to 500 µm, more preferably from 30 to 350 µm. If the thickness is smaller than 20 µm, then the mechanical strength of the screen will be low and it will be difficult to fabricate large-size screens. If the thickness is larger than 500 µm, then the images on the back side of the screen will be unclear. For the same reasons as above, the overall thickness of the screen of the invention is preferably from 20 to 2000 µm, more preferably from 30 to 1000 µm, even more preferably from 50 to 800 µm. The thickness as referred to herein is measured according to the method of JIS-P8118.

For making it have the above-mentioned optical properties, the film layer (A) may be processed to have pores therein. Preferably, the porosity of the film layer is from 0.1 to 25%, more preferably from 1 to 20%, even more preferably from 3 to 15%. If the porosity is smaller than 0.1%, then the images on the projector side of the screen will be dark and will be difficult to see through the screen; but if larger than 25%, then the images on the back side of the screen will be unclear. The porosity as referred to herein means the following: The film is cut, and its cross section is observed with an electronic microscope. The areal ratio of the pores seen in the cross section is measured, and is represented in terms of percentage to indicate the porosity of the film.

### <Film Layer (A)>

The film layer (A) to constitute the screen of the invention comprises a thermoplastic resin. Typically, the film layer (A) may be fabricated by mixing a thermoplastic resin with an inorganic fine powder and/or an organic filler followed by forming the resulting mixture into a film.

The thermoplastic resin includes polyethylene-based resins such as low-density polyethylene, linear low-density polyethylene, middle-density polyethylene, high-density polyethylene; polypropylene-based resins; polyolefin-based resins such as polymethyl-1-pentene, ethylene-cyclic olefin copolymer; polyamide-based resins such as nylon-6, nylon-6, 6, nylon-6,10; polyester-based resins such as polyethylene terephthalate and its copolymer, polyethylene naphthalate, aliphatic polyester; and polycarbonate, atactic polystyrene, syndiotactic polystyrene, and polyphenylene sulfide. Two or more of these may be used, as combined.

Of those, preferred are polyolefin-based resins and polyester-based resins; and more preferred are polypropylene-based resins of polyolefin-based resins. The polypropylene-based resins usable herein include propylene homopolymer, and copolymer of propylene with α-olefin such as ethylene, 1-butene, 1-hexene, 1-heptene and 4-methyl-1-pentene. The stereospecificity of the resins is not specifically defined, and the resins may be isotactic or syndiotactic and may have any desired degree of stereospecificity.

The copolymers may be binary, ternary or quaternary ones, and may be random copolymers or block copolymers.

The essential thermoplastic resin (the resin that quantitatively accounts for the greatest part of the layer) in the film layer (A) is preferably a polyolefin-based resin, more preferably a polypropylene-based resin.

The inorganic fine powder includes calcium carbonate, calcinedclay, silica, diatomaceous earth, talc, mica, synthetic mica, sericite, kaolinite, titanium oxide, barium sulfate, alumina. Of those, preferred are calcium carbonate and barium sulfate.

For the organic filler, preferably selected is a resin that differs from the thermoplastic resin to be the essential ingredient of the film layer. For example, when a polyolefin-based resin is used for the thermoplastic resin film, then the organic filler for it is preferably one having a melting point of from 120 to 300°C or a glass transition point of from 120 to 280°C, for example, selected from polyethylene terephthalate, polybutylene terephthalate, polycarbonate, nylon-6, nylon-6, 6, cyclic olefin homopolymer, and cyclic olefin copolymer (COC) of cyclic olefin with ethylene or the like.

When a polyester-based resin is used for the thermoplastic resin film, then the organic filler for it is preferably one having a melting point of from 120 to 300°C or a glass transition point of from 120 to 280°C, for example, selected from polypropylene, polystyrene, polycarbonate, nylon-6, nylon-6, 6, polymethyl-1-pentene, cyclic olefin homopolymer, and copolymer (COC) of cyclic olefin with ethylene or the like.

Either singly or as combined, one or more selected from the above-mentioned inorganic fine powder and organic filler may be in the film layer (A). When two or more are selected and combined to be in the film layer, the organic fine powder and the inorganic filler may be combined.

The content of the inorganic fine powder and/or the organic filler in the film layer (A) is preferably from 1 to 50% by weight, more preferably from 3 to 45% by weight, even more preferably from 5 to 25% by weight. If the content is smaller than 1% by weight or larger than 50% by weight, then the whole light transmittance, the whole light reflectance and the opacity of the film layer could not be well balanced.

Further if desired, the film layer (A) may contain antioxidant, light stabilizer, dispersant, lubricant, etc. The antioxidant may be a steric-hindered phenol-type, or phosphorus-containing, or amine-type antioxidant, and its content may be from 0.001 to 1% by weight. The light stabilizer may be a steric-hindered amine-type, or benzotriazole-type, or benzophenone-type light stabilizer, and its content may be from 0.001 to 1% by weight. The inorganic fine powder dispersant may be a silane-coupling agent, a higher fatty acid such as oleic acid or stearic acid, metal soap, polyacrylic acid, polymethacrylic acid or their salt, and its content may be from 0.01 to 4% by weight.

For shaping the mixture that comprises the thermoplastic resin, inorganic fine powder and/or organic filler, employable is any ordinary method. Concretely, herein employable is a casting method that comprises sheetwise extruding resin melt (s) through a single-layered or multi-layered T-die or I-die connected to an extruder; or a monoaxial-stretching film-forming method that comprises monoaxially stretching the cast film in a mode of machine-direction stretching to be attained by utilizing the peripheral speed difference between multiple rolls; or a biaxial-stretching film-forming method that comprises further stretching the monoaxially-stretched film in a mode of cross-direction stretching to be attained in a tenter oven; or a simultaneous biaxial-stretching film-forming method to be attained by a combination of a tenter oven and a linear motor.

The stretching temperature is lower by 2 to 60°C than the melting point of the thermoplastic resin used. When the resin is propylene homopolymer (melting point, 155 to 167°C), then the stretching temperature preferably falls between 152 and 164°C; and when it is high-density polyethylene (melting point, 121 to 134°C), then the stretching temperature preferably falls between 110 and 120°C. The pulling rate for the stretching preferably falls between 20 and 350 m/min.

The film layer (A) may have a single-layered structure or a multi-layered structure. When it has a multi-layered structure, it may be a two-layered, three-layered, or more multi-layered film.

When it has a single-layered structure, the film may be unstretched, monoaxially stretched or biaxially stretched. When it has a two-layered structure, the film may have any structure of unstretched/unstretched, unstretched/monoaxially-stretched, unstretched/biaxially-stretched, monoaxially-stretched/monoaxially-stretched, monoaxially-stretched/biaxially-stretched, or biaxially-stretched/biaxially-stretched. When it has a three-layered or more multi-layered structure, the film may have a combined structure of the above-mentioned single-layered structure and two-layered structure, and these structures may be combined in any desired manner for it.

The layer multiplication may be effected in any known method of coextrusion or lamination.

If desired, a coating layer that is suitable to printing with offset printer, gravure printer, flexographic printer, screen printer, letterpress printer, laser printer, thermal transfer printer, inkjet printer or the like may be provided on at least one face of the film layer (A), not causing any optical inconvenience for image projection thereon.

Using the film of the type makes it possible to provide a screen having background information or images printed thereon.

Also if desired, an adhesive layer may be provided on the back of the film layer (A). The adhesive is typically a rubber adhesive, an acrylic adhesive or a silicone adhesive. The rubber adhesive includes polyisobutylene rubber, butyl rubber and their mixture, as well as a composition prepared by adding an adhesiveness enhancer such as abietic acid rosin ester, terpene-phenol copolymer or terpene-indene copolymer to the rubber adhesive. The acrylic adhesive has a glass transition point of -20°C or lower, including 2-ethylhexyl acrylate/n-butyl acrylate copolymer, 2-ethylhexyl acrylate/ethyl acrylate/methyl methacrylate copolymer. Preferably, the adhesive is colorless and transparent. Regarding its morphology, the adhesive may be in any form of solution-type, emulsion-type or hot-melt-type adhesives. In general, a solution-type or emulsion-type adhesive may be applied to the back of the film layer in any known coating method to form the intended adhesive layer.

When it has an adhesive layer, then the screen of the invention may be stuck to objects such as show windows or window glass. When the adhesive layer is replaced with a re-peelable layer that enables repeated sticking and peeling, then the used screen may be readily peeled from the objects with no adhesive remaining on the objects, and the peeled screen may be re-used. In addition, the position control of the screen to be stuck to objects is easy, and the miss-stuck screen can be readily re-stuck to the intended position. Further, the screen can be stuck beautifully to an object with few air bubbles engulfed between the screen and the object. To that effect, the commercial-level advantages of the screen of the invention are great.

The re-peelable layer enables repeated sticking and peeling of the screen to and from objects. One example of the layer is a suction layer formed by foaming and working rubber, polyvinyl chloride, acrylic acid-based resin, urethane-based resin, silicone-based resin or elastomer. The suction layer exhibits its suction effect owing to the surface and inner pores (recesses) formed by foaming.

Apart from it, another example of the re-peelable layer is a weakly-adhesive layer that is produced by adding a particulate component capable of forming surface projections (spacers) to the above-mentioned adhesive layer, or is produced by forming a projection structure or adhesive-reducingmechanism having a continuous micropattern of dots, lines, lattices or networks on the surface of the adhesive layer in amode of embossing, screen printing or gravure printing thereon. The weakly-adhesive layer has such a projection structure (protrusions) or adhesive-reducing mechanism formed on its surface, and the adhering power of the adhesive of the layer is thereby reduced.

Further apart from the suction layer and the weakly-adhesive layer, still another example of the re-peelable layer is an electrostatic suction layer that comprises, for example, a dielectric material as the essential ingredient thereof. The composition and the structure of the layer are so designed that the layer is easy to electrically charge and its charge is difficult to attenuate.

The re-peelable layer may be controlled so as not to overstep the scope and the sprit of the invention.

Further if desired, through-holes may be formed in the film layer (A), which run in the direction of the thickness of the film layer. Preferably, the hole diameter is from 0.1 to 8 mm, more preferably from 0.2 to 7 mm. Also preferably, the hole pitch is from 0.1 to 5 mm, more preferably from 0.2 to 4 mm in terms of the shortest distance between the neighboring through-holes. Preferably, the through-holes are continuously distributed in the plane direction of the film layer (A) at the pitch as above. Having the through-holes in the film layer thereof, the screen makes it possible to see even the view on the back side thereof through it.

The hole diameter as referred to herein has the following meanings:
- When the hole shape is a true circle, the hole diameter indicates the diameter of the circle.
- When the hole shape is an oval, the hole diameter indicates the major diameter and the minor diameter of the oval.
- When the hole shape is a triangle, the hole diameter indicates the length of the shortest perpendicular line and that of the longest perpendicular line of the triangle.
- When the hole shape is a four-sided or more polygonal figure except trapezoids, the hole diameter indicates the length of the shortest diagonal line and that of the longest diagonal line of the figure.
- When the hole shape is a trapezoid, the hole diameter indicates the height (length of the perpendicular line) of the trapezoid.
- When the hole shape is an irregular figure, the hole diameter indicates the circle-corresponding diameter of the irregular figure, or indicates the length of the shortest line and the longest line connecting one point on the hole circumference to another point thereon of the irregular figure.

Both the above-mentioned "minor diameter and major diameter" must fall within a range of from 0.1 to 8 mm. The same shall apply also to the above-mentioned "shortest and longest" length. The shortest distance between the neighboring through-holes as referred to herein means the shortest distance between the hole edge of one through-hole formed in the film layer (A) and the hole edge of another through-hole nearest to the former through-hole also formed in the film layer.

If the hole diameter is smaller than 0.1 mm or if the shortest distance between the neighboring through-holes is larger than 5 mm, then the view on the back of the screen will be difficult to see through the screen. On the other hand, if the hole diameter is larger than 8 mm or the shortest distance between the neighboring through-holes is smaller than 0.1 mm, then the projected images will be difficult to see on the screen.

Regarding the hole diameter on the projector side of the screen, the shape of the through-holes running through the film layer (A) may vary in the direction of the thickness of the film layer. The hole shape may be the same in all the through-holes or may differ between them. Preferably, the hole shape is a true circle or a true polygon, and most preferably it is a true circle. The shortest distance between the neighboring through-holes may be the same or nearly the same for all the through-holes or may differ between them.

For forming the through-holes running in the direction of the thickness of the film layer (A) , employable are chemical treatment (etching or the like dissolution) ; mechanical punching with a diamond particles-fitted roller or a punching die; punching with hot needles; laser ray perforation; electron beam-irradiating perforation; plasma perforation; and high-pressure discharge perforation. These methods of forming through-holes may be combined for use herein.

The embodiments of the through-holes may be suitably determined in accordance with the requirement for the areal visibility of the view on the back of the screen through it. The through-holes may be formed in all the area of the screen or only in a predetermined area thereof.

### <Film Layer (B)>

If desired, a film layer (B) that comprises a thermoplastic resin may be provided in the screen of the invention so as to enhance the mechanical strength of the screen that may be large-sized.

In particular, when through-holes are formed in the film layer (A) as in the above, the toughness, and the mechanical strength such as the tensile strength and the tear strength of the screen itself may lower, and, as a result, the screen could not be large-sized or would be difficult to handle. To solve the problem and if desired, a film layer (B) may be provided in the screen of the invention.

Preferably, the whole light transmittance of the film layer (B) to constitute the screen of the invention is at least 88%, more preferably at least 90%.

If the whole light transmittance of the layer is smaller than 88%, then the images on the back of the screen will be dark and will be difficult to see through the screen, and, in addition, the view on the back of the screen that may be seen through the screen owing to the effect of the through-holes will be difficult to see through the screen.

The thickness of the film layer (B) to constitute the screen is preferably from 10 to 1000 µm, more preferably from 20 to 800 µm, even more preferably from 30 to 500 µm. If the thickness is smaller than 10 µm, then the mechanical strength thereof will be insufficient and the film layer (B) could not exhibit its function. If the thickness is larger than 1000 µm, then the weight of the whole screen will increase and the screen will be difficult to handle. If so, in addition, the images on the back of the screen will be unclear.

For forming the film layer (B) to constitute the screen of the invention, the same thermoplastic resin, inorganic fine powder, organic filler and additives as those for the above-mentioned film layer (A) may be used and the same film-forming method as that for the film layer (A) may be employed. For the thermoplastic resin for the film layer (B), preferred are polyolefin-based resins and polyester-based resins; and more preferred are polyester-based resins. The film layer (B) may have a single-layered structure or a multi-layered structure. When it has a multi-layered structure, it may be a two-layered, three-layered, or more multi-layered film.

For laminating the film layer (A) and the film layer (B), employable is any ordinary dry lamination, wet lamination extrusion (sandwich) lamination, thermal lamination, or pressure bonding of the two via an adhesive layer of the same adhesive as that of the above-mentioned adhesive layer. For pressure bonding, it is desirable that the adhesive layer is formed on the surface of the film layer (B) that faces the film layer (A) to be laminated thereon. Also preferably, the adhesive is transparent, more preferably colorless transparent. When through-holes are formed in the film layer (A) , it is desirable that the film layer (A) and the film layer (B) are laminated together after the through-holes are formed in the film layer (A).

When the screen of the invention is processed to have a habit of curling, then it may be favorable for a roll screen. Preferably, the curl value of the screen of the invention is at most 250 mm, more preferably from 10 to 200 mm, even more preferably from 10 to 150 mm.

The curl value as referred to herein is determined as follows: The screen to be analyzed is cut into an A4-size piece (210 × 297 mm) in such a manner that the curling direction of the sample is to be the major side direction thereof. Then, the sample is put on a horizontal plane with it curling upward, and the length of the major side of the sample projected onto the horizontal plane is measured. This indicates the curl value of the screen.

Measured according to the method as above, a screen not curling at all has a curl value of 297 mm; a screen curling semicircularly when seen to its side has a curl value of about 189 mm; and a screen curling cylindrically has a curl value of 95 mm or less. The samples having a smaller curl value curl more strongly.

When the screen of the invention is processed into a roll screen, then it may be wound up compactly since it well curls and the diameter of the rolled screen may be small. In addition, the screen is prevented from being wrinkled since it does not require any compulsory force for winding it up. If the curl value is more than 250 mm, then excess force may be applied to the screen when it is wound up, and the screen will be thereby folded or wrinkled.

The curling direction of the screen of the invention is not specifically defined. However, for protecting the projected image-receiving surface thereof while not in service, the screen is preferably so curled that it may be wound up with the film layer (A) which is to be the projected image-receiving surface being inside.

The method of curling the screen is not also specifically defined. For example, while kept free or while wound up around a round rod, the screen is exposed to a specific temperature condition (hothouse, hot water, high-temperature steam) for a predetermined period of time, whereby the screen may be readily curled. Apart from it, the screen may be passed through a furnace kept at a specific temperature and then wound up whereby the screen may also be curled. While kept in contact with or kept near to it, the screen may be passed through a thermal roll or a thermal head kept at a predetermined temperature or through a thermal conversion head capable of generating specific electromagnetic waves and changing them into heat on screens, and then wound up whereby the screen may also be curled. The specific temperature as referred to herein is preferably not lower than the thermal shrinkage-initiating temperature of the film layer (A) and/or the film layer (B) that constitute the screen. For example, it may fall between 60°C and 300°C, more preferably between 80 and 280°C, even more preferably between 100 and 260°C.

The processing time may be determined within a range of from 1 millisecond and 7 days or so, depending on the method employed. Preferably, it falls between 3 msec and 5 days, more preferably between 5 msec and 3 days.

The screen of the invention may be formed of the film layer (A) alone. More effectively, however, it has a laminate structure of the film layer (A) and the film layer (B) that differ from each other in the thermal shrinkage behavior in order that the screen may be readily curled and may well keep the curled condition thereof.

The screen of the invention may be fabricated, for example, by laminating the film layer (A) and the film layer (B) optionally followed by forming an adhesive layer or a re-peelable layer on any one surface of the resulting laminate structure. For the adhesive layer or the re-peelable layer, the same ingredients as those mentioned hereinabove may be used, and the layer may be formed in the same manner as above.

The adhesive layer or the re-peelable layer may be formed before the film layer (A) and the film layer (B) are laminated.

Preferably, a peelable substance is laminated on the surface of the adhesive layer or the re-peelable layer. The peelable substance is for protecting the adhesive layer or the re-peelable layer while not in service, and it is peeled off just before use.

In order that the peelable substance could be readily peeled from the adhesive layer or the re-peelable layer, the surface of the peelable substance to be in contact with the adhesive layer or the re-peelable layer is generally processed with silicone. The peelable substance for use herein may be any ordinary one. For example, woodfree paper or kraft paper may be used directly as it is, or after calendered, or coated with resin, or laminated with any other film; or glassine paper, coated paper or plastic films processed with silicone may also be used.

The invention is described more concretely with reference to the following Production Examples, Examples, Comparative Examples and Test Examples. The material, its amount and ratio, and the operation and its order mentioned below may be suitably changed and modified not overstepping the sprit and the scope of the invention. Accordingly, the scope of the invention should not be limited to the Examples mentioned below. The materials used in the Production Examples are shown in Table 1 mentioned below.

**Table 1**

| Material | Details |
|---|---|
| PP1 | propylene homopolymer (trade name, Novatec PP EA8 by Nippon Polychem Corporation), MFR (230°C, 2.16 kg load) = 0.8 g/10 min |
| PP2 | propylene homopolymer (trade name, Novatec PP MA4 by Nippon Polychem Corporation), MFR (230°C. 2.16 kg load) = 5 g/10 min |
| HDPE | high-density polyethylene (trade name, Novatec HD HJ360 by Nippon Polychem Corporation), MFR (230°C, 2.16 kg load) = 5.5 g/10 min |
| Calcium Carbonate | heavy calcium carbonate (trade name, Softon 1800 by Bihoku Hunka Kogyo), mean particle size 1.8 µm |

### [Production of Thermoplastic Resin-Containing Film Layer]

### (Production Example 1)

87% by weight of propylene homopolymer (PP2), 10% by weight of high-density polyethylene (HDPE) and 3% by weight of calcium carbonate were melt-kneaded in an extruder at 250°C, then fed into a die set at 250°C, sheetwise extruded out, and cooled with a chill roll to obtain an unstretched film. The unstretched film was heated at 135°C and stretched 4-fold in the machine direction to be a monoaxially-stretched film. The film is a base layer (b).

Amixture comprising 52% by weight of propylene homopolymer (PP1), 3% by weight of HDPE and 45% by weight of calcium carbonate was melt-kneaded in a different extruder at 250°C, then fed into a die set at 250°C, and sheetwise extruded out to be laminated on both faces of the 4-fold stretched film, as a surface layer (a) and a back layer (c). This was cooled to 60°C to be a three-layered laminate film (a/b/c).

The laminate film was heated at 164°C and stretched 9-fold in the cross direction by the use of a tenter. Next, this was annealed at 160°C and cooled to 60°C, and its edges were trimmed away to give a multi-layered stretched resin film having a thickness of 92 µm (a/b/c = 22 µm/48 µm/22 µm).

### (Production Example 2)

A mixture to be a substrate layer (b), comprising 87% by weight of PP2, 10% by weight of HDPE and 3% by weight of calcium carbonate, and a mixture to be a surface layer (a) and a back layer (c) , comprising 52% by weight of PP1, 3% by weight of HDPE and 45% by weight of calcium carbonate, were separately melt-kneaded in different extruders at 250°C, then fed into one co-extrusion die set at 250°C, and sheetwise extruded out while laminated in the die. This was cooled with a chill roll to be an unstretched film. The unstretched film was heated at 135°C and stretched 4-fold in the machine direction to be a monoaxially-stretched film.

The stretched film was heated at 164°C and stretched 9-fold in the cross direction by the use of a tenter. Next, this was annealed at 160°C and cooled to 60°C, and its edges were trimmed away to give a multi-layered stretched resin film having a thickness of 60 µm (a/b/c = 2 µm/56 µm/2 µm).

### (Production Example 3)

A multi-layered stretched resin film having a thickness of 77 µm (a/b/c = 18 µm/41 µm/18 µm) was produced in the same manner as in Production Example 1 except that the amount of the resins to be extruded out was varied. @@ An inkjet coating agent having a composition mentioned below was applied onto the surface layer (a) of the multi-layered stretched resin film in such a manner that the dry thickness of the coating layer to be formed could be 40 µm, and then dried to form the intended coating layer thereon.

| | |
|---|---|
| Fine particulate silica (mean particle size 0.3 µm) (solid content 18% by weight) | 76 wt.% |
| Polyvinyl alcohol (solid content 10% by weight) | 20 wt.% |
| Melamine-formalin resin (solid content 30% by weight) | 2 wt.% |
| Cationic acrylic polymer (solid content 30% by weight) | 2 wt.% |

### (Production Example 4)

A polyethylene film was laminated on both faces of woodfree paper to prepare a peelable substance, and one surface thereof was processed with silicone to prepare a releasable sheet. An acrylic adhesive (trade name, Oribain BPS-1109 by Toyo Ink) was applied to the silicone-processed surface of the releasable sheet in such a manner that the solid content of the coating layer could be 25 g/m², and dried to form an adhesive layer thereon. The adhesive layer thus formed on the releasable sheet was laminated onto the back layer (c) of the film prepared in Production Example 1 to thereby produce a processed film having thereon the adhesive layer and the peelable substance.

### (Production Example 5)

87% by weight of PP2, 10% by weight of HDPE and 3% by weight of calcium carbonate were melt-kneaded in an extruder at 250°C, then fed into a die set at 250°C, sheetwise extruded out, and cooled with a chill roll to obtain an unstretched film. The unstretched film was heated at 135°C and stretched 4-fold in the machine direction to be a monoaxially-stretched film. The film is a base layer (b).

A mixture comprising 87% by weight of PP1, 10% by weight of HDPE and 3% by weight of calcium carbonate was melt-kneaded in a different extruder at 250°C, then fed into a die set at 250°C, and sheetwise extruded out to be laminated on both faces of the 4-fold stretched film, as a surface layer (a) and a back layer (c). This was cooled to 60°C to be a three-layered laminate film (a/b/c).

The laminate film was heated at 164°C and stretched 9-fold in the cross direction by the use of a tenter. Next, this was annealed at 160°C and cooled to 60°C, and its edges were trimmed away to give a multi-layered stretched resin film having a thickness of 68 µm (a/b/c = 17 µm/33 µm/18 µm).

### (Production Example 6)

81% by weight of PP1, 3% by weight of HDPE and 16% by weight of calcium carbonate were melt-kneaded in an extruder at 250°C, then fed into a die set at 250°C, sheetwise extruded out, and cooled with a chill roll to obtain an unstretched film. The unstretched film was heated at 150°C and stretched 5-fold in the machine direction to be a monoaxially-stretched film. The film is a base layer (b).

A mixture comprising 54% by weight of PP2 and 46% by weight of calcium carbonate was melt-kneaded in a different extruder at 250°C, then fed into a die set at 250°C, and sheetwise extruded out to be laminated on both faces of the 5-fold stretched film, as a surface layer (a) and a back layer (c). This was cooled to 60°C to be a three-layered laminate film (a/b/c).

The laminate film was heated at 155°C and stretched 7.5-fold in the cross direction by the use of a tenter. Next, this was annealed at 165°C and cooled to 60°C, and its edges were trimmed away to give a multi-layered stretched resin film having a thickness of 95 µm (a/b/c = 19 µm/57 µm/19 µm).

### (Examples 1, 2)

The film layer of Production Examples 1 and 2 was used directly as a screen.

### (Example 3)

The coating layer-having film layer of Production Example 3 was used directly as a screen.

### (Example 4)

The adhesive layer-having film layer of Production Example 4 was used directly as a screen.

### (Comparative Example 1)

The film layer of Production Example 5 was used directly as a screen.

### (Comparative Example 2)

The film layer of Production Example 6 was used directly as a screen.

### (Example 5)

According to a laser punching method, true-circular through-holes having a diameter of 0.5 mm were formed entirely in the film layer of Production Example 1 to give a screen. The shortest distance between the neighboring through-holes was 1. 0 mm (the through-hole center pitch was 1.5 mm).

### (Example 6)

A transparent polyester film (trade name, Diafoil T600E having a thickness of 50 µm and a whole light transmittance of 90%, by Mitsubishi Chemical Polyester Film - this is hereinafter referred to as PET film) was dry-laminated on the back layer (c) of the screen of Example 5 to give a screen.

### (Example 7)

An adhesive layer and a peelable substance were laminated on the PET film of the screen of Example 6, in the same manner as in Production Example 4 to give a screen.

### (Example 8)

Using a precision punching die, true-circular through-holes having a diameter of 1.0 mm were entirely formed in the coating layer-having film layer of Production Example 3. The shortest distance between the neighboring through-holes was 1.0 mm (the through-hole center pitch was 2.0 mm). Then, a PET film was dry-laminated on the back layer (c) of the thus-processed film layer to give a laminate (I).

An emulsion comprising essential ingredients of urethane-based resin and acrylic acid-based resin was foamed by the use of a foaming machine at a foaming ratio, emulsion/air = 1/3 by volume, and the foamed emulsion was applied to the PET film of the laminate (I) with a clearance of 1 mm, and dried to form thereon a re-peelable layer that may be repeatedly stuck and peeled. A releasable polyester film that had been processed with silicone on its surface was used as a peelable substance, and the peelable substance was laminated on the re-peelable layer with the silicone-processed face of the former kept in contact with the latter to give a laminate (II).

Using a large-size IJ printer (trade name, MC-9000 by Seiko Epson) , a frame pattern was printed on the coating layer of the laminate (II) at the periphery thereof to give a screen.

When the thus-obtained screen was applied to a show window, its ability to appeal the images inside the printed frame thereof was good because of the good design of the printed frame. The images in the frame of the screen could be seen on both sides of the screen, inside and outside the room.

The screen was easy to repeatedly stick to and peel from glass with no air bubbles engulfed between the two, and no adhesive remained after the screen was peeled off.

### (Example 9)

A polyurethane adhesive (trade name, BPS-2080A, BPS-2080B by Toyo Morton) was applied to one face of a transparent polyester film (trade name, Diafoil T600 having a thickness of 100 µm and a whole light transmittance of 90%, by Mitsubishi Chemical Polyester Film) in such a manner that the dry amount of the coating layer could be 3 g/m², and dried. This was laminated on the back layer (c) of the film layer of Production Example 1 with the adhesive face of the former kept in contact with the back layer (c) of the latter to give a laminate (III).

The laminate (III) was passed through hot rolls having a controlled surface temperature of 210°C and having a diameter of 30 mm, at a speed of 6 m/min (the contact time with the hot rolls was about 10 msec), and wound up with the surface layer (a) facing inside to give a screen having a habit of curling.

The curl value of the thus-obtained screen was 130 mm.

### (Test Example 1)

The film layers obtained in Production Examples 1 to 6 were tested for the porosity, the whole light transmittance, the whole light reflectance, the opacity and the glossiness thereof, according to the methods mentioned above.

Only for the porosity thereof, the film of Production Example 3 was tested before the coating layer was formed thereon. For the other properties, it was tested having the coating layer formed thereon.

Only for the porosity thereof, the film of Production Example 4 was tested before the adhesive layer and the peelable substance were provided thereon. For the other properties, it was tested having the adhesive layer alone formed thereon but not having the peelable substance.

The results are given in Table 2.

### (Test Example 2)

The screens of Examples 1, 2, 3, 5 and 6 and Comparative Examples 1 and 2 were worked into tapestries. The screens having an adhesive layer or a re-peelable layer of Examples 4, 7 and 8 were attached to windowpanes to give show windows. The curled screen of Example 9 was worked into a roll screen to be wound up.

From a liquid-crystal projector, an image was projected onto the film (A) serving as a screen surface, and it was evaluated in point of the sharpness and the halation resistance according to the criteria mentioned below.
- Image sharpness:
   ○ Sharp.
   × Not sharp. (The image formation was out of focus, and the image was blurred and was difficult to see.)
- Halation resistance:
   ○ Good.
   × Not good. (The image was difficult to see owing to the mirror reflection.)

The worked screens were tested for their mechanical strength, for which the working operation was taken into consideration according to the criteria mentioned below.
- Tapestry Screen, Roll Screen (the operation of setting it to objects was taken into consideration):
   ○ Not torn even when pulled strongly.
   × Torn when pulled strongly.
- Show Window Screen (the operation of removing it from windowpanes was taken into consideration):
   ○ Not broken when peeled off.
   × Broken when peeled off.

The results are given in Table 3.

In Examples 5 to 8 where through-holes were formed to see the view on the back of the screen through it, the visibility of the view on the back of the screen was evaluated according to the criteria mentioned below.
○ Visible. (The outline and the motion of the substances on the back of the screen were visible.)
× Invisible. (The outline and the motion of the substances on the back of the screen were invisible.)

In Example 9 where the screen was curled to be a roll screen, the easiness in winding up the screen was evaluated according to the criteria mentioned below.
○ The screen was smoothly wound up with no resistance thereto.
× The screen was difficult to wind up, and could not be well wound up.

The results are given in Table 4 and Table 5.

**Table 2**

| Production Example of Film Layer (A) | Thickness of Film Layer (A) (µm) | Thickness of Layers a/b/c (µm) | Coating Layer (thickness, µm) | Adhesive Layer (thickness, µm) | Porosity of Film Layer (A) (%) | Whole Light Transmittance (%) | Whole Light Reflectance (%) | Opacity (%) | Glossiness (%) |
|---|---|---|---|---|---|---|---|---|---|
| Production Example 1 | 92 | 22/48/22 | - | - | 4 | 64 | 32 | 39 | 13 |
| Production Example 2 | 60 | 2/56/2 | - | - | 6 | 65 | 33 | 31 | 42 |
| Production Example 3 | 77 | 18/41/18 | yes (40) | - | 5 | 36 | 62 | 69 | 2 |
| Production Example 4 | 92 | 22/48/22 | - | yes (25) | 4 | 59 | 37 | 41 | 13 |
| Production Example 5 | 68 | 17/33/18 | - | - | 1 | 84 | 14 | 16 | 85 |
| Production Example 6 | 95 | 19/57/19 | - | - | 26 | 13 | 87 | 92 | 17 |

**Table 3**

| Example/ Comparative Example | Production Example of Film Layer (A) | Type of Screen | Screen Performance | | | Mechanical Strength |
|---|---|---|---|---|---|---|
| | | | Surface Side (reflected light) | | Back Side | |
| | | | Image Sharpness | Halation Resistance | Image Sharpness | |
| Example 1 | Production Example 1 | tapestry | ○ | ○ | ○ | ○ |
| Example 2 | Production Example 2 | tapestry | ○ | ○ | ○ | ○ |
| Example 3 | Production Example 3 | tapestry | ○ | ○ | ○ | ○ |
| Example 4 | Production Example 4 | show window | ○ | ○ | ○ | ○ |
| Comparative Example 1 | Production Example 5 | tapestry | × | × | × | ○ |
| Comparative Example 2 | Production Example 6 | tapestry | ○ | ○ | × | ○ |
| Example 5 | Production Example 1 | tapestry | ○ | ○ | ○ | ○ |
| Example 6 | Production Example 1 | tapestry | ○ | ○ | ○ | ○ |
| Example 7 | Production Example 1 | show window | ○ | ○ | ○ | ○ |
| Example 8 | Production Example 2 | show window | ○ | ○ | ○ | ○ |
| Example 9 | Production Example 1 | roll screen | ○ | ○ | ○ | ○ |

**Table 4**

| Example/ Comparative Example | Film Layer (A) | | Film Layer (B) (thickness µm) | Type of Screen | Performance |
|---|---|---|---|---|---|
| | Production Example | Through-holes | | | Visibility of View on Back Side |
| Example 5 | Production Example 1 | yes | - | tapestry | ○ |
| Example 6 | Production Example 1 | yes | yes (50) | tapestry | ○ |
| Example 7 | Production Example 1 | yes | yes (50) | show window | ○ |
| Example 8 | Production Example 2 | yes | yes (50) | show window | ○ |

**Table 5**

| Example/ Comparative Example | Production Example of Film Layer (A) | Film Layer (B) (thickness µm) | Curling (curl value) | Type of Screen | Performance |
|---|---|---|---|---|---|
| | | | | | Easiness in Winding up Screen |
| Example 9 | Production Example 1 | yes (100) | yes (130) | roll screen | ○ |

### INDUSTRIAL APPLICABILITY

The screen of the invention has good image visibility on both faces thereof, and the images on it are sharp with no halation. In addition, the screen makes it possible to see the view on the back thereof, and the screen may be readily wound up with no problem in point of the mechanical strength thereof. Accordingly, the screen of the invention exhibits excellent functions for image proj ection thereon, and the industrial value of the screen is great.

## Claims

1. A screen having a film layer (A) that comprises a thermoplastic resin and has a whole light transmittance of from 30 to 80% and a whole light reflectance of from 20 to 70%.

2. The screen as claimed in claim 1, wherein the opacity of the film layer (A) is from 10 to 75%.

3. The screen as claimed in claim 1 or 2, wherein the glossiness of the film layer (A) is at most 60%.

4. The screen as claimed in any one of claims 1 to 3, wherein the thickness of the film layer (A) is from 20 to 500 µm.

5. The screen as claimed in any one of claims 1 to 4, wherein the porosity of the film layer (A) is from 0.1 to 25%.

6. The screen as claimed in any one of claims 1 to 5, wherein the film layer (A) has a multi-layer structure.

7. The screen as claimed in claim 6, wherein the film layer (A) has a multi-layer structure that contains a layer stretched at least one direction.

8. The screen as claimed in any one of claims 1 to 7, wherein a coating layer is provided on at least one face of the film layer (A).

9. The screen as claimed in any one of claims 1 to 8, wherein the film layer (A) has through-holes having a hole diameter of from 0.1 to 8 mm and running in the direction of the thickness of the film layer, and wherein the through-holes are continuously distributed in the plane direction of the film layer at a pitch of from 0.1 to 5 mm in terms of the shortest distance between the neighboring through-holes.

10. The screen as claimed in any one of claims 1 to 9, wherein a film layer (B) comprising a thermoplastic resin and having a whole light transmittance of at least 88% is provided on one face of the film layer (A).

11. The screen as claimed in claim 10, wherein the thickness of the film layer (B) is from 10 to 1000 µm.

12. The screen as claimed in any one of claims 1 to 11, which has a curl value mentioned below of at most 250 mm: Curl value: The screen to be analyzed is cut into an A4-size piece (210 × 297 mm) in such a manner that the curling direction of the sample is to be the major side direction thereof, the sample is put on a horizontal plane with it curling upward, and the length of the major side of the sample projected onto the horizontal plane is measured, and this indicates the curl value of the screen.

13. The screen as claimed in any one of claims 1 to 12, wherein an adhesive layer is provided on at least one face of the film layer (A) or on the film layer (B).

14. The screen as claimed in any one of claims 1 to 12, wherein a re-peelable layer that may be repeatedly stuck and peeled is provided on at least one face of the film layer (A) or on the film layer (B).

15. The screen as claimed in claim 14, wherein the re-peelable layer is a suction layer, a weakly-adhesive layer or an electrostatic suction layer.

16. The screen as claimed in any of claims 13 to 15, wherein a peelable substance is laminated on the surface of the adhesive layer or the re-peelable layer.

17. The screen as claimed in any one of claims 1 to 16, wherein the film layer (A) and/or the film layer (B) and/or the coating layer are printed.

18. The screen as claimed in any one of claims 1 to 17, wherein the thermoplastic resin includes a polyolefin-based resin or a polyester-based resin.

19. The screen as claimed in any one of claims 1 to 18, wherein the essential thermoplastic resin of the film layer (A) is a polyolefin-based resin.

20. The screen as claimed in claim 19, wherein the polyolefin-based resin is a polypropylene-based resin.
